# FASCICULE DE BREVET EUROPEEN

(11) **EP 0 479 632 B1**
(45) Date de publication et mention de la délivrance du brevet: **30.11.1994**
(21) Numéro de dépôt: 91402395.7
(22) Date de dépôt: 09.09.1991
(51) Int. Cl.: F01D 5/02, F16D 1/06

(54) **Roue de turbine en matériau composite**
Turbinenrad aus Verbundwerkstoff
Turbine wheel made of a composite material

(30) Priorité: 02.10.1990 FR 9012133
(43) Date de publication de la demande: 08.04.1992
(73) Titulaire: SOCIETE EUROPEENNE DE PROPULSION, 92150 Suresnes (FR)
(72) Inventeur: Georges, Jean-Michel, F-33170 Gradignan (FR); Fouillot, Jacques G., F-33270 Floirac (FR)
(74) Mandataire: Joly, Jean-Jacques

(56) Documents cités:
- DE-A- 3 005 058
- FR-A- 1 162 697
- FR-A- 1 218 404
- GB-A- 866 710

## Description

La présente invention concerne une roue de turbine en matériau composite, plus précisément une roue de turbine dont le moyeu porte une denture d'entraînement formée de dents qui s'étendent radialement sur une des faces de la roue.

L'invention vise plus particulièrement les roues de turbines en matériau composite à matrice céramique, notamment pour des turbines à gaz.

Les matériaux composites thermostructuraux sont caractérisés par leurs propriétés mécaniques qui les rendent aptes à constituer des éléments de structure capables de supporter des efforts importants et par leur capacité à conserver ces propriétés aux températures élevées. Ces matériaux sont constitués d'un renfort formé à base de fibres et d'une matrice densifiant le renfort. Le matériau constitutif des fibres du renfort est le carbone ou une céramique (par exemple carbure de silicium). Le matériau constitutif de la matrice est du carbone (notamment pour les composites carbone-carbone) ou une céramique (pour les composites à matrice céramique, ou CMC).

Une roue de turbine en CMC peut être réalisée à partir d'une préforme fibreuse constituée de strates d'une texture bi-dimensionnelle, telle qu'un tissu de carbone ou céramique. Les strates sont empilées et éventuellement liées les unes aux autres (par aiguilletage ou implantation de fils, par exemple). La préforme est densifiée par le matériau constitutif de la matrice, par voie gazeuse ou par voie liquide. Dans le premier cas, la matrice est formée par infiltration chimique en phase vapeur, de façon bien connue en soi. Dans le deuxième cas, la matrice est formée, également de façon bien connue en soi, par imprégnation de la préforme par un précurseur de la matrice et traitement thermique de transformation du précurseur pour donner le matériau de la matrice.

Après densification, la roue de turbine est usinée pour être amenée à ses dimensions définitives, et pour former la denture d'entraînement.

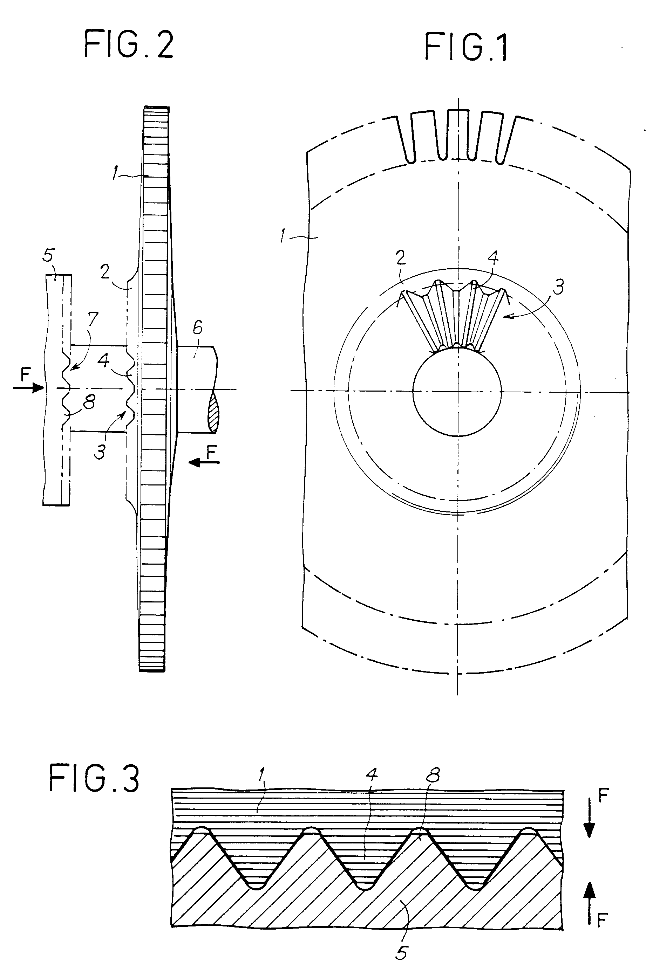

Les figures 1 et 2 montrent une roue 1 en matériau composite de type CMC, dont le moyeu 2 présente une denture classique 3 formée de dents 4 qui s'étendent radialement sur une des faces de la roue 1. La roue 1 est entraînée en rotation au moyen d'une roue dentée 5 (montrée uniquement sur la figure 2) fixée sur un arbre 6 traversant la roue de turbine.

La roue 5 comporte une denture formée de dents radiales 8 de forme correspondante à celle des dents 4 avec lesquelles elles viennent en prise. Sur la figure 2, pour plus de commodité, les roues 1 et 5 sont montrées éloignées l'une de l'autre le long de leur axe commun.

En fonctionnement, la roue de turbine 1 est entrainée en rotation au moyen de la roue dentée 5 contre laquelle elle est appliquée avec pression par des moyens de serrage (non représentés).

Cette application avec pression de la roue dentée 5 contre la roue de turbine 1 provoque des concentrations de contraintes au fond des entailles pratiquées dans la roue 1 pour former les dents 4, et induit des contraintes de cisaillement interlaminaire importantes dans le matériau composite de la roue 1. En effet, comme le montre la figure 3, qui est une vue développée partielle des dentures 3 et 7, l'effort de serrage (flèches F) provoque des réactions sur les flancs des dents parallèlement aux strates du renfort fibreux du matériau composite, ces réactions constituant les contraintes de cisaillement interlaminaire précitées et pouvant provoquer des délaminages (glissement de strates les unes par rapport aux autres).

La présente invention a pour but d'éviter ces inconvénients et d'offrir par conséquent une roue de turbine en matériau composite dont la denture radiale peut être serrée sur celle d'une roue d'entraînement sans risquer d'induire des contraintes trop importantes dans le matériau composite.

Ce but est atteint au moyen d'une roue de turbine en matériau composite du type défini en tête de la description, et dans laquelle, conformément à l'invention, chaque dent de la denture d'entraînement est asymétrique par rapport au plan méridien passant par l'arête de la dent, et présente un premier flanc faisant par rapport à ce plan un angle de préférence compris entre 15 et 45°, et un deuxième flanc faisant par rapport à ce plan un angle de préférence compris entre 55 et 85°. De préférence encore, la somme des angles précités est au moins égale à 100°.

Bien entendu, l'entraînement de la roue de turbine est assuré par une roue dentée dont la denture a un profil complémentaire de celui de la roue de turbine. Lors du serrage de la roue dentée d'entraînement contre la roue de turbine, les premiers flancs des dents ont essentiellement pour fonction d'assurer le centrage de la roue de turbine ; ensuite, ces premiers flancs ont essentiellement pour fonction d'assurer la transmission du couple d'entraînement. La pression de serrage est supportée essentiellement par les deuxièmes flancs des dents, lesquels sont faiblement inclinés par rapport à la face de la roue. Il en résulte une diminution des contraintes au fond des entailles, donc un moindre effet d'entaille exercé par les dents de la roue d'entraînement, ainsi qu'une diminution des contraintes en cisaillement dues à l'effort de serrage.

De préférence, les arêtes formant les sommets et les fonds des dents de la denture de la roue de turbine convergent vers un même point situé sur l'axe de la roue. De la sorte, des déformations telles que des dilatations d'origine thermique se produisent de façon homothétique, assurant un contact permanent entre les dentures de la roue de turbine et de la roue d'entraînement en dépit de possibles différences de coefficient de dilatation entre les matériaux constitutifs des deux roues.

Un mode de réalisation de l'invention sera décrit ci-après à titre indicatif mais non limitatif.

Sur les dessins annexés :
- la figure 1 est une vue partielle de face d'une roue de turbine munie d'une denture d'entraînement classique,
- la figure 2 est une vue de côté de la roue de turbine de la figure 1 et d'une roue d'entraînement,
- la figure 3 est une vue développée partielle des dentures de la roue de turbine et de la roue d'entraînement de la figure 2,
- la figure 4 est une vue de face partielle d'une roue de turbine munie d'une denture d'entraînement conforme à l'invention,
- la figure 5 est une vue latérale de la roue de la figure 4,
- la figure 6 est une vue latérale en coupe méridienne de la roue de la figure 4, et
- la figure 7 est une vue développée partielle des dentures de la roue de turbine de la figure 4 et d'une roue d'entraînement correspondante.

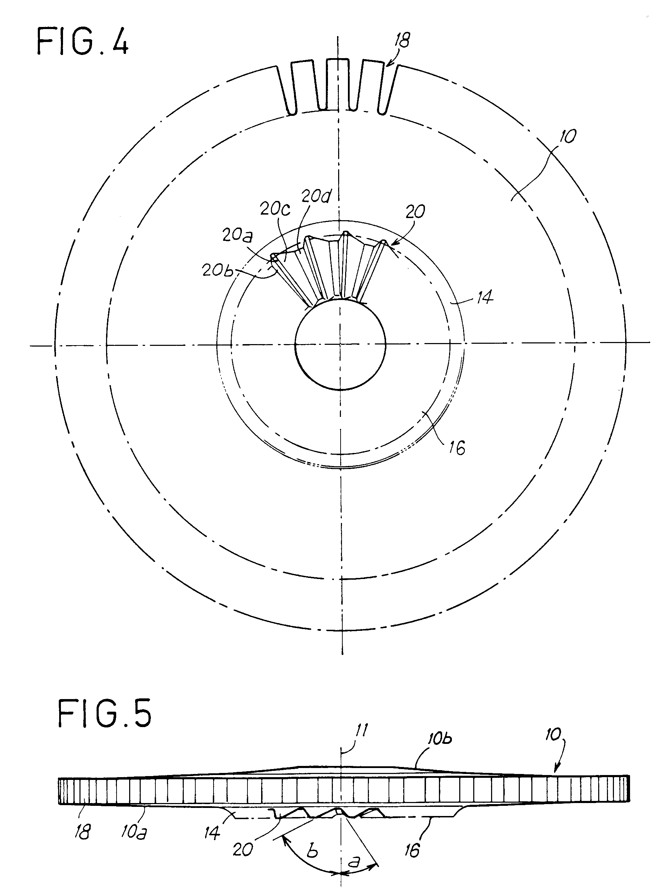

La roue de turbine 10 montrée par les figures 4 à 6 est par exemple destinée à une turbine à gaz d'un système de propulsion. La roue de turbine est réalisée en matériau composite à matrice céramique, par exemple en composite carbone/carbure de silicium ou en composite carbure de silicium/carbure de silicium. Le renfort fibreux en carbone ou carbure de silicium est par exemple constitué de strates de tissu circulaires 12 empilées perpendiculairement à l'axe de la roue 10 et éventuellement liées entre elles par aiguilletage ou par implantation de fils. Des procédés d'élaboration de tels renfort fibreux sont bien connus ; on pourra se r'férer aux documents FR-A-2 584 106, FR-A-2 565 262, FR 88 13 132. Le renfort est densifié par infiltration chimique en phase vapeur. Un procédé d'infiltration de carbure de silicium en phase vapeur est décrit notamment dans le document FR-A-2 401 888.

Après densification, la roue est usinée à ses dimensions définitives, en particulier pour former le moyeu 14 de la roue et tailler une denture d'entraînement 16 sur une (10a) des faces 10a et 10b de la roue, au niveau du moyeu. Des aubes équidistantes 18 sont également taillées à la périphérie de la roue.

La denture 16 est formée de dents équidistantes 20 qui s'étendent radialement et sont réparties tout autour de l'axe 11 de la roue. Les dents 20 sont usinées au moyen d'une meule (ou molette) dont le profil correspond à celui des dents.

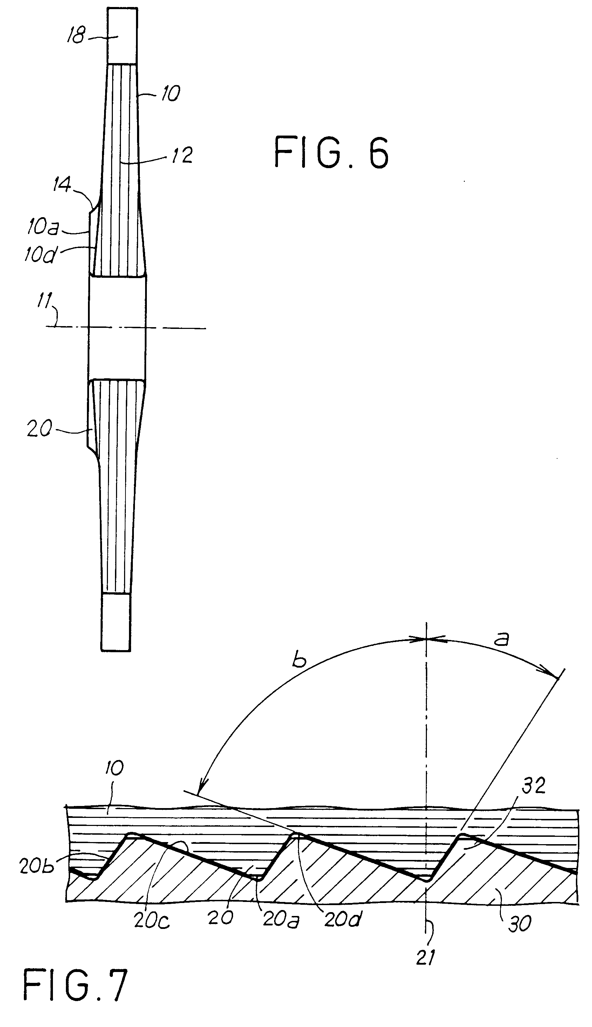

Conformément à l'invention, chaque dent 20 est asymétrique par rapport au plan méridien 21 passant par son arête 20a (voir figure 7). Ainsi, chaque dent 20 a un premier flanc 20b qui fait un angle a par rapport au plan 21 et un deuxième flanc 20c qui fait un angle b par rapport au plan 21, l'angle a étant inférieur à l'angle b.

Le flanc "relevé" 20b, qui est relativement fortement incliné par rapport à la face 10a participe au centrage de la roue de turbine 10, lorsque celle-ci est serrée contre une roue d'entraînement 30 (figure 7), et à la transmission du couple entre les dents 32 de la roue d'entraînement 30 et les dents 20. L'angle a est de préférence choisi entre 15 et 45°, par exemple environ égal à 35°, Le flanc "abaissé" 20c, qui est relativement faiblement incliné par rapport à la face 10a, subit l'essentiel de l'effort de serrage de la roue 30 sur la roue 10. Du fait de l'orientation des flancs 20c, les contraintes au fond des entailles entre les dents 20 sont minimisées. Il en est de même pour les contraintes de cisaillement interlaminaire susceptible de provoquer un délaminage entre les strates constituant le renfort fibreux du matériau composite. L'angle b est de préférence choisi entre 60 et 85°, par exemple environ égal à 70°.

De préférence encore, la somme entre les angles a et b est au moins égale à 100°, de façon à conserver un coefficient d'entaille faible.

Avantageusement, les lignes contenant les arêtes 20a des dents 20 et les fonds d'entailles 20d entre dents 20 convergent vers un même point situé sur l'axe 11 (voir ligne 6).

Les dents 32 de la roue 30 ont un profil complémentaire de celui des dents 20 et 30. Par conséquent, des déformations des dents, telles que des déformations d'origine thermique, se produisent de façon homothétique. De la sorte, un contact intime est conservé entre les flancs des dents 20 et 32, même si les matériaux constitutifs des roues 10 et 30 ont des coefficients de dilatation thermique différents.

## Revendications

1. Roue de turbine en matériau composite, comportant un moyeu qui porte une denture d'entraînement (16) formée de dents (20) qui s'étendent radialement sur une des faces de la roue (10), caractérisée en ce que chaque dent (20) est asymétrique par rapport au plan méridien (21) passant par l'arête de la dent, et présente un premier flanc (20b) faisant par rapport à ce plan un angle de préférence compris entre 15 et 45°, et un deuxième flanc (20c) faisant par rapport à ce plan un angle de préférence compris entre 55 et 85°.

2. Roue de turbine selon la revendication 1, caractérisée en ce que la somme des angles formés par le premier flanc (20b) et par le deuxième flanc (20c) par rapport au plan méridien (21) est de préférence au moins égale à 100°.

3. Roue de turbine selon l'une quelconque des revendications 1 et 2, caractérisée en ce que les arêtes (20a) des dents (20) et les fonds (20d) des entailles entre dents (20) sont sur des lignes qui convergent en un même point situé sur l'axe (11) de la roue (10).

## Claims

1. Turbine wheel made of composite material, comprising a hub that bears a drive gear (16) formed of teeth (20) that extend radially on one face of the wheel (10), characterized in that each tooth (20) is asymmetrical with respect to a meridian plane (21) passing through an apex thereof, and has a first shoulder (20b) that subtends an angle, preferably in a range of 15 to 45°, relative to said plane, and a second shoulder (20c) that subtends an angle, preferably in a range of 55 to 85°, relative to said plane.

2. Turbine wheel according to claim 1, characterized in that the sum of the angles subtended by the first shoulder (20b) and by the second shoulder (20c) relative to the meridian plane (21) is preferably at least equal to 100°.

3. Turbine wheel according to any one of claims 1 and 2, characterized in that the edges (20a) of the teeth (20) and the cog roots (20d) between the teeth (20) are on lines that converge to a common point located on the axis (11) of the wheel (10).

## Patentansprüche

1. Turbinenrad aus Verbundwerkstoff, bestehend aus einer Nabe, die eine Antriebszahnung (16) trägt, die aus Zähnen (20) gebildet ist, die sich auf einer der Stirnseiten des Rades (10) radial erstrecken,
**dadurch gekennzeichnet**, daß
jeder Zahn (20) bezüglich einer Mittelebene (21) asymmetrisch ist, die durch die Zahnkante verläuft, und eine erste Flanke (20b) hat, die bezüglich dieser Ebene einen Winkel Vorzugsweise zwischen 15 und 45° bildet sowie eine zweite Flanke (20c), die bezüglich dieser Ebene einen Winkel Vorzugsweise zwischen 55 und 85° bildet.

2. Turbinenrad nach Anspruch 1,
**dadurch gekennzeichnet**, daß
die Summe der durch die erste Flanke (20b) und die zweite Flanke (20c) bezüglich der Mittelebene (21) gebildeten Winkel vorzugsweise weniger als 100° beträgt.

3. Turbinenrad nach einem der Ansprüche 1 und 2,
**dadurch gekennzeichnet**, daß
die Kanten (20a) der Zähne (20) und die Flächen (20d) der Lücken zwischen den Zähnen (20) auf Linien liegen, die im selben Punkt konvergieren, der auf der Achse (11) des Rades (20) liegt.
